# EUROPEAN PATENT SPECIFICATION

(11) **EP 4 626 688 B1**
(45) Date of publication and mention of the grant of the patent: **11.02.2026**
(21) Application number: 23790416.4
(22) Date of filing: 05.10.2023
(51) Int. Cl.: B29C 73/24, B29C 73/02, F03D 1/06, F03D 80/50

(54) **A ROBOTIC METHOD FOR INTRODUCING A SOLIDIFYING SUBSTANCE INTO THE INNER CAVITY OF WIND TURBINE BLADES**
ROBOTISCHES VERFAHREN ZUM EINBRINGEN EINER ERSTARRENDEN SUBSTANZ IN DEN INNENRAUM VON WINDTURBINENSCHAUFELN
PROCÉDÉ ROBOTIQUE D'INTRODUCTION D'UNE SUBSTANCE DE SOLIDIFICATION DANS LA CAVITÉ INTERNE DE PALES D'ÉOLIENNE

(30) Priority: 13.02.2023 LV 230016
(43) Date of publication of application: 08.10.2025
(73) Proprietor: Aerones Engineering, SIA, 1073 Riga (LV)
(72) Inventor: PUTRAMS, Janis, 1019 Riga (LV)
(74) Representative: Fortuna, Jevgenijs
(86) International application number: PCT/LV2023/050015
(87) International publication number: WO 2024/172637

(56) References cited:
- CN-A- 108 087 214
- CN-A- 108 087 215
- KR-A- 20140 001 430
- THUNGA MAHENDRA ET AL: "Injection repair of carbon fiber/bismaleimide composite panels with bisphenol E cyanate ester resin", COMPOSITES SCIENCE AND TECHNOLOGY, ELSEVIER, AMSTERDAM, NL, vol. 100, 2 June 2014 (2014-06-02), pages 174 - 181, XP029040478, ISSN: 0266-3538, DOI: 10.1016/J.COMPSCITECH.2014.05.024

## Description

### Field of the invention

The present invention relates to the wind turbines and wind turbine blades' maintenance devices, in particular, to the methods and devices for introducing a solidifying substance into the inner cavity of wind turbine blades.

### Background of the invention

Wind turbine blades are typically void structures generally made from glass or carbon fiber with laminate and sandwich structures. Generally, these turbines have three blades that are all connected to the single hub. Every blade also has a lightning protection system that has a cable or solid plate which connects one or more receptor to the grounding connection in the hub and nacelle. One of the receptors are typically in the tip of the blade. Some turbines have a solid metal tip which is connected to the lightning cable as well. Every blade also has one or more drainage holes which serves the purpose of letting out any condensate that has accumulated inside the blade. There can be one or several drainage holes near the tip of the blade as well as closer to the root of the blade.

Wind turbines have seen a lot of development as the need for green energy increases. Also, the size of the turbines has grown. Some turbine model blades have reached the length of more than hundred meters.

As these blades rotate it is important that all blades are balanced. Any imbalance would create vibration for the hub and the nacelle and could damage the tower, bearings, and blades themselves.

Every blade has its mass and specific stiffness which defines its natural vibration. As there are many moving parts and complex interactions it is possible that some vibrations can cause resonance. In case of resonance the vibration would amplify and could damage the system. This could be very difficult to predict or model in advance. It might be that these resonance frequencies and problems show up only on the field. Therefore, sometimes it might be beneficial to add additional weight to one of more blades once the blade has been already installed on the wind turbine.

To add weight to the blade it would not be possible to add it from the outside as any additional object would cause aerodynamic disturbance. It is possible to access the blade from the inside but only in root area near the hub where the size of blade is big enough for the person to go in. Though to balance the blade it is preferable to add as little weight as necessary to achieve the balance. For this reason, it is preferable to add the weight to the tip of the blade. One of the methods is to inject a liquid material through a hole that would solidify afterwards.

The traditional method of performing this work is done using rope-access technicians. They would use either ropes or platforms to access the tip and perform the work. The process may include one or more of the following steps: (i) clean existing drainage holes to make sure there is no water inside the blade; (ii) close existing drainage holes so the injected material does not flow out; (iii) install one or more rods in the tip of the blade to make sure the injected material does not fall out when the blade moves upwards; (iv) make a hole in the blade tip and inject mass material; (v) measure fill level and drill new drainage holes; (vi) close the drilled holes, rod ends and old drainage holes; (vii) paint the surface.

### Brief summary of the invention

The invention deals with robotic systems that would perform the blade tip mass addition in a much faster and safer manner.

A specific robotic system can be used for each task. The known robotic systems for cleaning the drainage holes can be used (e.g. the solution published at https://aerones.com/services/inspection/drainge-hole/). To close or seal the drainage holes a universal robotic arm can be used with custom attachment that uses suction cups with UV curable material, peristaltic pump and UV light to fill them, cure and leave a flat surface.

A custom robot is designed that can drill holes in the blade, insert therein filling means designed to allow filling of a liquid or semiliquid materials into the wind turbine blade cavity, which will solidify therein.

A thermal camera can be used to detect fill level of the material introduced. According to an embodiment, during the curing the injected material may have an exothermic reaction. According to this embodiment, the temperature can be conducted or applied to at least one blade wall or its segment (preferably, to respective segments of two or more blade walls) and can be observed from the outside using thermal camera.

There is known a drill used for repairing wind turbine blade, and blade repairing system including the same (KR20140001430A). The drill comprises a main body which is designed to cut a blade; and a hollow part which is formed inside the main body and is designed to be filled with adhesive filler, wherein the main body includes multiple penetration holes which enable the filler to be injected into the hollow part in order to be discharged to the outside of the main body.

### Brief description of the drawings

Fig. 1 shows an embodiment of a liquid or a semiliquid material filling means, where Fig. 1A shows a filling means is used to make a bore in a wall of a wind turbine blade; Fig. 1B - a filling means put through the first bore made is further used to make a coaxial bore in the second wall of the wind turbine blade; Fig. 1C - a material being injected into the inner cavity of the wind turbine blade through the filling means; Fig. 1D - a filling means pulled back so to leave only a rod part in the blade internal cavity and a drilling means and a core part cut out from the filling means;
Fig. 2 - an embodiment of a tool set configured to drill through a wind turbine blade walls, pushing through the drilled apertures a filling means, supplying of liquid or semiliquid material into the inner cavity of the blade, partial pulling out of the filling means, and cutting away ends of the filling means;
Fig. 3 - one embodiment of the tool configured to drill through a wind turbine blade walls, push through the filling means and supply of the material into the inner cavity of the blade;
Fig. 4 - another embodiment of the tool as show on Fig. 3 provided with means for cutting away ends of the filling means.

### Detailed description of the invention

The claimed method comprises a number of steps set forth further in details with references to the drawings.

A wind turbine blade drainage should preferably be cleaned, which however is an optional step and can be done few days before or may be skipped e.g. for newly installed wind turbine blades.

Next the drainage hole is closed and sealed. It is important that it is done fast, yet the seal is strong and the surface is sufficiently flat. Any surface defects would need to be sanded afterwards which would take time.

Next step is to drill through a wind turbine blade walls to create coaxial apertures, through which a filling means designed to allow filling of a liquid or semiliquid materials into the wind turbine blade cavity can be put through.

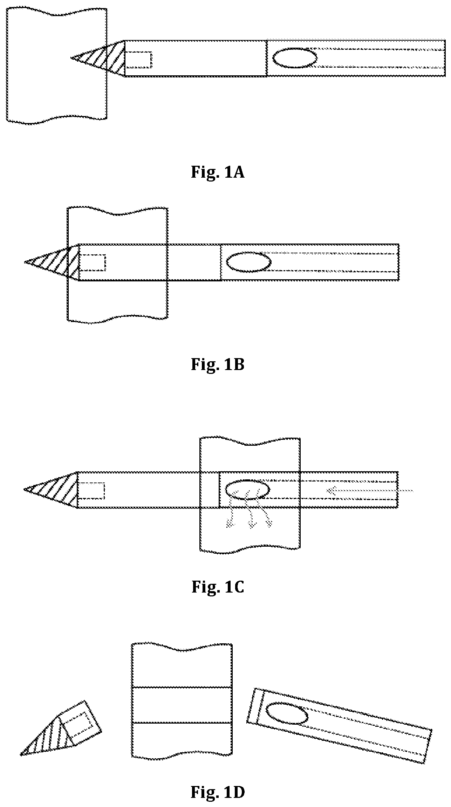

According to the preferred embodiment, the filling means comprise a drilling means (such as a borer, a drill bit, or other means fulfilling the same function), a rod and a core provided with a channel and one or more apertures connected with the channel designed to allow supply of a liquid or semiliquid material through the channel and apertures into the hollow part of the blade (Fig. 1A).

The rod is preferably made substantially from the same material as the wind turbine blade, which means that the material of the rod is the same as the wind turbine blade, or a material having substantially similar, or equivalent properties, namely, having tensile strength 27 000 - 32 000 MPa (defined according to ASTM D-638 standard), tensile modulus 2.3x10⁶-2.7 x10⁶ GPa (defined according to ASTM D-638 standard), flexural strength 27 000 - 32 000 MPa (defined according to ASTM D-790 standard), flexural modulus 1.6x10⁶-2.0 x10⁶ GPa (defined according to ASTM D-790 standard), coefficient of thermal expansion 7.8x10⁻⁶ - 8.2x10⁻⁶ cm/cm/°C (defined according to ASTM D-696 standard).

The rod is designed to assist in filling and sealing the bored holes in the wind turbine blade walls, as well as to serve as an additional fixing means for the material injected into the wind turbine blade internal cavity, to prevent displacement of the injected material within the wind turbine blade internal cavity, should the injected material not have sufficient adherence to the surface of the wind turbine blade walls inside its inner cavity.

After the through coaxial apertures in the blade walls are created (Fig. 1A-1B) the filling means are pushed through both apertures so that the apertures in the core part of the filling means are located in the inner cavity of the blade (preferably substantially equidistantly from both walls of the blade) - Fig. 1C.

The next step is supplying of the required liquid or semiliquid material into the inner cavity of the blade through the channel and aperture or apertures of the core part of the filling means (Fig. 1C).

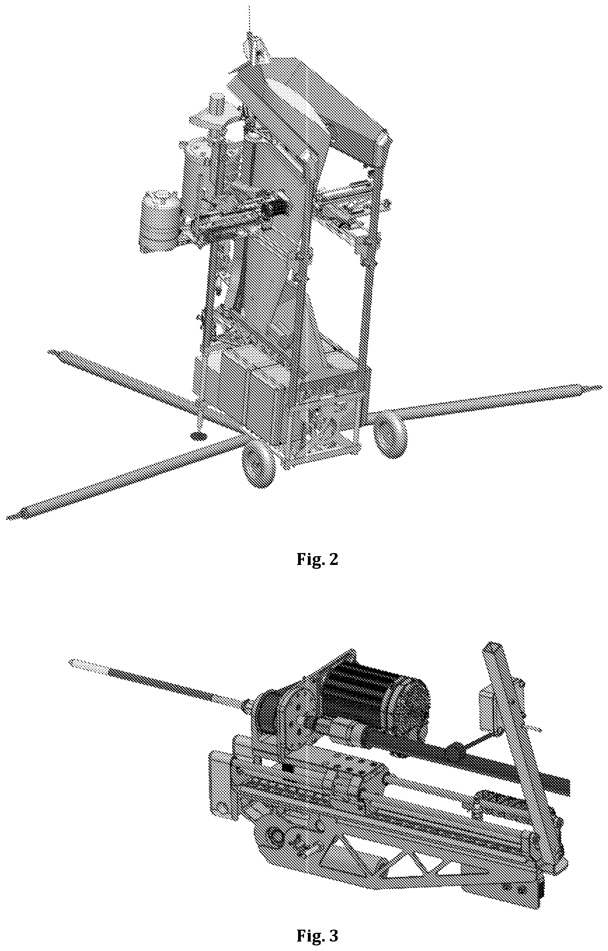

After the required amount of the material is filled into the inner cavity of the blade, the filling means is pulled or pushed back so that only the rod part of the filling means remains within the inner cavity of the blade. A thermal camera can be used to detect the fill level of the material inside the inner cavity of the blade (Fig. 3). Because mass material curing is an exothermic reaction this can be seen from outside the blade with a thermal camera.

The ends of the rod of the filling means are cut away from the filling means from the outer sides of the wind turbine blade, so that the rod part of the filling means remains within the inner cavity of the blade and the ends of the rod part are closing the apertures made in the wind turbine blade walls (Fig. 1D).

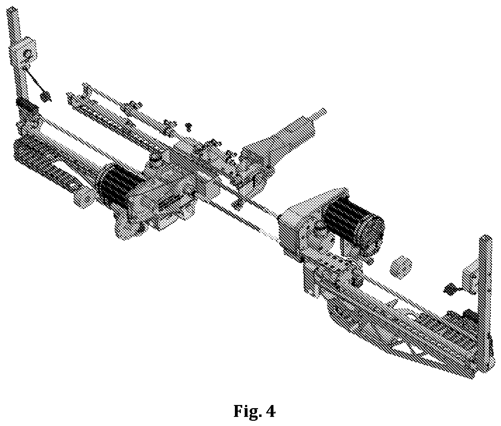

To achieve the most efficient process, drilling apertures, inserting the filling means and filling in the material is done all by the same robotic tool set (Fig. 2-4). Preferably, rod ends are being cut off also by the same tool set. The next preferable step is patching the rod ends in the apertures.

## Claims

1. A method for introducing a solidifying substance into an inner cavity of a wind turbine blade, the method comprising the following steps:
(i) drilling coaxial apertures in a wind turbine blade opposite walls by a filling means comprising a drilling means, a rod and a core fixed together, wherein the core is provided with a channel and one or more apertures connected with the channel and designed to allow supply of a liquid or semiliquid solidifying material through the channel and the apertures; wherein the rod is made substantially from the same material as the wind turbine blade;
(ii) pushing out the drilling means through the created apertures so that the apertures in the core part of the filling means are located in the inner cavity of the blade;
(iii) supplying a solidifying substance in the liquid or semiliquid form into the inner cavity of the blade through the channel and aperture or apertures of the core part of the filling means;
(iv) partially pulling or pushing out the filling means so that only the rod part of the filling means remains within the inner cavity of the blade;
(v) cutting away the ends of the rod of the filling means from the outer sides of the wind turbine blade, so that the rod part of the filling means remains within the inner cavity of the blade and the ends of the rod part are closing the apertures made in the wind turbine blade walls.

2. The method of claim 1, wherein the filling means at the step (ii) are positioned between the apertures in the inner cavity of the blade such that the apertures in the core part of the filling means are located substantially equidistantly from both walls of the blade.

3. The method of claim 1 or 2, wherein the material of the rod is **characterized by** the following features: tensile strength 27 000 - 32 000 MPa (defined according to the ASTM D-638 standard), tensile modulus 2.3x10⁶-2.7 x10⁶ GPa (defined according to the ASTM D-638 standard), flexural strength 27 000 - 32 000 MPa (defined according to the ASTM D-790 standard), flexural modulus 1.6x10⁶-2.0 x10⁶ GPa (defined according to the ASTM D-790 standard), coefficient of thermal expansion 7.8x10⁻⁶ - 8.2x10⁻⁶ cm/cm/°C (defined according to the ASTM D-696 standard).

## Patentansprüche

1. Verfahren zum Einbringen eines Festigers in den inneren Hohlraum eines Windrad-Rotorblattes. Das Verfahren beinhaltet dabei die folgenden Schritte:
(i) Bohren von koaxialen Öffnungen in den einander gegenüberliegenden Wänden des Windrad-Rotorblattes durch ein Einfüllgerät, das aus einem Bohrgerät, einem Stab und einem Innenteil besteht, die aneinander befestigt sind. Das Innenteil ist dabei mit einem Kanal und einer oder mehreren Öffnungen versehen. Diese sind mit dem Kanal verbunden und so beschaffen, dass sie die Zufuhr eines flüssigen oder halbflüssigen Festigers durch den Kanal und die Öffnungen in das Innenteil des Einfüllgerätes ermöglichen. Der Stab ist dabei im Wesentlichen aus dem gleichen Material wie das Windrad-Rotorblatt hergestellt;
(ii) Drücken des Bohrgerätes durch die entstandenen Öffnungen, so dass sich die Öffnungen im Innenteil des Einfüllgerätes im inneren Hohlraum des Rotorblatts befinden;
(iii) Zuführen eines Festigers in flüssiger oder halbflüssiger Form in den inneren Hohlraum des Rotorblatts durch den Kanal und die Öffnung(en) des Innenteils des Einfüllgerätes;
(iv) Teilweises Herausziehen oder Herausschieben des Einfüllgerätes, so dass nur sein Stab im inneren Hohlraum des Rotorblatts verbleibt;
(v) Abschneiden der Enden des Stabes des Einfüllgerätes von den Außenseiten des Windrad-Rotorblattes, so dass der Stabteil des Einfüllgerätes im inneren Hohlraum des Rotorblattes verbleibt und die Enden des Stabteils die in den Wänden des Windturbinenblattes gebohrten Öffnungen verschließen.

2. Verfahren gemäß Patentanspruch 1, bei dem das Einfüllgerät bei Schritt (ii) zwischen den Öffnungen im inneren Hohlraum des Rotorblattes so positioniert werden, dass die Öffnungen im Innenteil des Einfüllgerätes im Wesentlichen in gleichem Abstand von beiden Wänden des Rotorblattes angeordnet sind.

3. Verfahren gemäß Patentanspruch 1 oder 2, wobei das Material des Stabes durch die folgenden Merkmale gekennzeichnet ist: Zugfestigkeit 27 000 - 32 000 MPa (definiert gem. Norm ASTM D-638), Zugmodul 2,3 x 106 - 2,7 x 106 GPa (definiert gem. Norm ASTM D-638), Biegefestigkeit 27 000 - 32 000 MPa (definiert gem. Norm ASTM D-790), Biegemodul 1,6 x 106 - 2,0 x 106 GPa (definiert gem. Norm ASTM D-790), Wärmeausdehnungskoeffizient 7,8 x 10-6 - 8,2 x 10-6 cm/cm/°C (definiert gem. Norm ASTM D-696).

## Revendications

1. Procédé permettant d'introduire une substance de solidification dans une cavité interne d'une pale d'éolienne, le procédé comprenant les étapes suivantes :
(i) forage d'ouvertures coaxiales dans des parois opposées d'une pale d'éolienne par des moyens de remplissage comprenant des moyens de forage, une tige et un noyau fixés ensemble, dans lequel le noyau est pourvu d'un canal et d'une ou plusieurs ouvertures reliées au canal et destinées à permettre une alimentation d'un matériau de solidification liquide ou semi-liquide à travers le canal et les ouvertures dans la partie noyau des moyens de remplissage ; dans lequel la tige est fabriquée sensiblement dans le même matériau que la pale d'éolienne ;
(ii) poussée des moyens de forage à travers les ouvertures créées de sorte que les ouvertures dans la partie noyau des moyens de remplissage sont localisées dans la cavité interne de la pale ;
(iii) alimentation d'une substance de solidification sous la forme liquide ou semi-liquide dans la cavité interne de la pale à travers le canal et l'ouverture ou les ouvertures de la partie noyau des moyens de remplissage ;
(iv) traction ou poussée partielle des moyens de remplissage de sorte que seule la partie tige des moyens de remplissage reste au sein de la cavité interne de la pale ;
(v) découpe des extrémités de la tige des moyens de remplissage à partir des côtés externes de la pale d'éolienne, de sorte que la partie tige des moyens de remplissage reste au sein de la cavité interne de la pale et que les extrémités de la partie tige ferment les ouvertures réalisées dans les parois de pale d'éolienne.

2. Procédé selon la revendication 1, dans lequel les moyens de remplissage à l'étape (ii) sont positionnés entre les ouvertures dans la cavité interne de la pale de telle sorte que les ouvertures dans la partie noyau des moyens de remplissage sont localisées sensiblement à égale distance de l'une et l'autre des parois de la pale.

3. Procédé selon la revendication 1 ou 2, dans lequel le matériau de la tige est **caractérisé par** les caractéristiques suivantes : résistance en traction 27 000 à 32 000 MPa (définie selon la norme ASTM D-638), module de traction 2,3x10⁶ à 2,7x10⁶ GPa (défini selon la norme ASTM D-638), résistance en flexion 27 000 à 32 000 MPa (définie selon la norme ASTM D-790), module de flexion 1,6x10⁶ à 2,0 x10⁶ GPa (défini selon la norme ASTM D-790), coefficient de dilatation thermique 7,8x10⁻⁶ à 8,2x10⁻⁶ cm/cm/°C (défini selon la norme ASTM D-696).
